(19) Europäisches Patentamt
European Patent Office
Office européen des brevets

(11) Veröffentlichungsnummer: **0 002 793**
**B1**

(12) **EUROPÄISCHE PATENTSCHRIFT**

(45) Veröffentlichungstag der Patentschrift: **09.06.82**

(51) Int. Cl.³: **C 08 G 12/12**

(21) Anmeldenummer: **78101780.1**

(22) Anmeldetag: **20.12.78**

(54) **Verfahren zur Herstellung von Weich- und Hartharzen und deren Verwendung.**

(30) Priorität: **22.12.77 DE 2757176**

(43) Veröffentlichungstag der Anmeldung:
**11.07.79 Patentblatt 79/14**

(45) Bekanntmachung des Hinweises auf die Patenterteilung:
**09.06.82 Patentblatt 82/23**

(84) Benannte Vertragsstaaten:
**BE CH DE FR GB NL SE**

(56) Entgegenhaltungen:
**DE - A - 2 639 754**
**GB - A - 1 193 347**

(73) Patentinhaber: **BASF Aktiengesellschaft**
**Carl-Bosch-Strasse 38**
**D-6700 Ludwigshafen (DE)**

(72) Erfinder: **Petersen, Harro, Dr.**
**Kalmitstrasse 23**
**D-6710 Frankenthal (DE)**
Erfinder: **Fischer, Kurt**
**Mundenheimer Strasse 168**
**D-6700 Ludwigshafen (DE)**
Erfinder: **Klug, Hans, Dr.**
**Deidesheimer Strasse 3**
**D-6704 Mutterstadt (DE)**
Erfinder: **Trimborn, Werner, Dr.**
**Hardenburgstrasse 22**
**D-6703 Limburgerhof (DE)**

**EP 0 002 793 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

Verfahren zur Herstellung von Weich- und Hartharzen und deren Verwendung

Die Erfindung betrifft ein Verfahren zur Herstellung von Weich- und Hartharzen aus Harnstoff und CH-aciden Aldehyden sowie deren Verwendung.

Aus der DE—C 1 230 805 sowie Veröffentlichungen von H. Petersen in Angewandte Chemie *76*, 909—919 (1964) und in Synthesis 1973, 243—292 ist bekannt, daß Harnstoffe der allgeinen Formel (I)

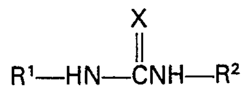

(I),

in der X = O oder S, $R^1$ und $R^2$ Wasserstoff oder Alkylreste bedeuten, mit 2 Mol eines CH-aciden Aldehyds der allgemeinen Formel (II)

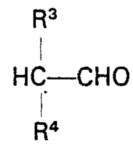

(II),

worin $R^3$ und $R^4$ Wasserstoffatome, gleiche oder verschiedene Alkylreste bedeuten, unter stark sauren Kondensationsbedingungen zu Hexahydropyrimidinen der allgemeinen Formel (III)

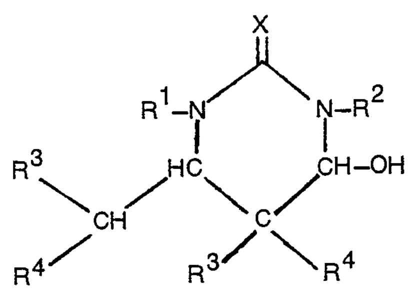

(III)

umgesetzt werden. Bei den Heterocyclen (III) handelt es sich um kristalline Verbindungen. Es ist ferner aus der DE—PS 1 670 153 bekannt, daß Verbindungen vom Typ (III) mit einem weiteren Mol eines CH-aciden Aldehyds der allgemeinen Formel (II) zu Hexahydropyrimidin-aldehyden der allgemeinen Formel (IV) unter sauren Kondensationsbedingungen umgesetzt werden können.

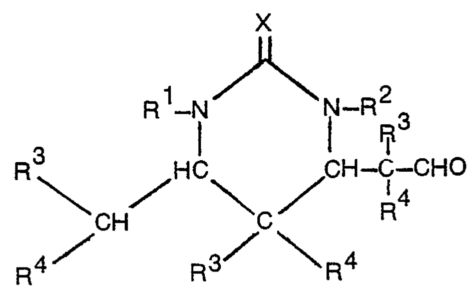

(IV)

Es handelt sich hierbei um Verbindungen, die sich umkristallisieren oder destillieren lassen. Sie weisen nicht den Charakter von Weich- oder Hartharzen auf. Verbindungen vom Typ (IV) spalten beim Stehen und insbesondere bei Belichtung Kohlenmonoxid ab und sind daher mit Vorsicht zu handhaben.

Aufgabe der vorliegenden Erfindung ist es, ein Verfahren aufzuzeigen, das die Herstellung von vorteilhaft verwendbaren Hart- und Weichharzen ermöglicht.

Es wurde überraschend gefunden, daß man bei der Kondensation von Harnstoff oder Thioharnstoff sowie seinen mono-und in einigen Fällen auch symmetrisch disubstituierten Derivaten mit CH-aciden Aldehyden der allgemeinen Formel (II), im Molverhältnis von 1 : 2 bzw. 1 : >2 bei der sauren Kondensation zu Kondensationsprodukten gelangt, die bei einer Nachbehandlung mit Alkalialkoholaten im wasserfreien Medium zu Weich- und Hartharzen führen.

Gegenstand der vorliegenden Erfindung ist ein Verfahren zur Herstellung von Weich- und Hartharzen aus Harnstoff und einem CH-aciden Aldehyd, wobei man Harnstoffe der allgemeinen Formel (I)

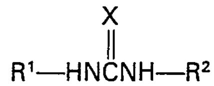 (I),

worin X Sauerstoff oder Schwefel und $R^1$ und $R^2$ Wasserstoff, gleiche oder verschiedene Alkyl-, Aryl- oder Aralkylreste oder gegebenenfalls einen Alkylenharnstoffrest bedeuten, mit mindestens 2 Mol eines CH-aciden Aldehyds derallgemeinen Formel (II)

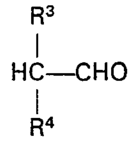 (II),

worin $R^3$ Wasserstoff oder wie $R^4$ gleiche oder verschiedene Alkyl-, Aryl- oder Aralkylreste bedeuten, zwischen 70 und 150°C in Gegenwart einer starken Säure zu einem Kondensationsprodukt umsetzt, das dadurch gekennzeichnet ist, daß man anschließend in wasserfreiem Medium mit einer Base nachbehandelt.

Eine bevorzugte Ausführungsform des erfindungsgemäßen Verfahrens besteht darin, daß man als Base zur Nachbehandlung ein Alkalialkoholat verwendet und die Umsetzung in Gegenwart aromatischer Kohlenwasserstoffe durchführt.

Gegenstand der vorliegenden Erfindung ist außerdem die Verwendung der erfindungsgemäß hergestellten Weich- und Hartharze in Kombination mit anderen Filmbildnern als Lackbindemittel.

Die erfindungsgemäßen Weich- und Hartharze weisen Erweichungspunkte zwischen ca. 50 und 150°C auf. Sie eignen sich in Kombination mit anderen Filmbildnern z.B. zur Herstellung von Holzlacken, Papierlacken und Korsionsschutzlacken.

Zu den Aufbaukomponenten der erfindungsgemäß herzustellenden Harze ist im einzelnen folgendes auszuführen.

Als Harnstoffe der allgemeinen Formel (I)

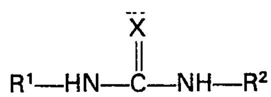 (I),

worin X Sauerstoff oder Schwefel und $R^1$ und $R^2$ Wasserstoff, gleiche oder verschiedene Alkylreste, insbesondere solche mit 1 bis 18 Kohlenstoffatomen, Aryl- oder Aralkylreste, insbesondere solche mit 6 bis 9 Kohlenstoffatomen, oder gegebenenfalls einen Alkylenharnstoffrest mit 1 bis 9 Kohlenstoffatomen in der Alkylengruppe bedeuten, eignen sich beispielsweise Harnstoff, Thioharnstoff, Monomethylharnstoff, Stearylharnstoff, symmetrischer Dimethylharnstoff, Propylenharnstoff, Hexamethylendiharnstoff, vorzugsweise Harnstoff, Methylharnstoff, Methylendiharnstoff und Hexamethylendiharnstoff.

CH-acide Aldehyde der allgemeinen Formel (II) sind solche,

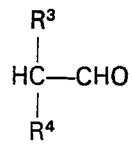 (II),

worin $R^3$ Wasserstoff oder wie $R^4$ gleiche oder verschiedene Alkylreste, insbesondere solche mit 1 bis 10 Kohlenstoffatomen, Aryl- oder Aralkylreste, insbesondere solche mit 6 bis 9 Kohlenstoffatomen bedeuten. Unter CH-aciden Aldehyden im Sinne der Erfindung sind dabei solche zu verstehen, die an dem der Carbonyl grouppe benachbarten Kohlenstoffatomen ein oder zwei Wasserstoffatome aufweisen. Geeignete Aldehyde sind z.B. Isobutyraldehyd, 2-Methylpentanal, 2-Äthylhexanal, Phenylpropanal, Isovaleraldehyd und n-Butyraldehyd.

Harnstoff und CH-acider Aldehyd werden im allgemeinen im Molverhältnis 1 : 2 bis 1 : 8, vorzugsweise 1 : 3 bis 1 : 6 eingesetzt.

Durch Variation der Molverhältnisse lassen sich die Eigenschaften der erfindungsgemäßen Harze, insbesondere ihre Erweichungspunkte und Lösungsmittelverträglichkeiten gezielt beeinflussen. Hartharze erhält man bei Molverhältnissen von Harnstoff zu CH-acidem Aldehyd von 1 : 2 bis 1 : 4. Weichharze erhält man dagegen bei Molverhältnissen von Harnstoff zu CH-acidem Aldehyd von 1 : >4.

Als Säuren eignen sich anorganische und organische Säuren, wie Oxalsäure und Phthalsäure, sowie vorzugsweise Schwefelsäure.

Die Durchführung des erfindungsgemäßen Verfahrens kann zweckmäßigerweise in Gegenwart von Lösungs- und/oder Verdünnungsmittel erfolgen. Als Lösungsmittel eignen sich insbesondere aromatische Kohlenwasserstoffe, wie Toluol oder Xylol.

Die saure Kondensation wird im Temperaturbereich zwischen 70 und 150, vorzugsweise 90 und

140°C durchgeführt und zwar zweckmäßigerweise solange, bis keine Wasserabspaltung mehr erfolgt. Nach beendeter saurer Kondensation wird wie üblich mit einer Base, z.B. Natronlauge oder Kalilauge neutralisiert und durch azeotrope Destillation vom Restwasser befreit. Danach wird das Kondensationsprodukt einer Nachbehandlung mit einer Base, bevorzugt einem Alkalialkoholat unterzogen. Hierzu werden katalytische Mengen, z.B. ca. 2 bis 5 Gew.%, bezogen auf Festharz, der Base, z.B. Natriumäthylat oder -methylat, zugesetzt und 1 bis 2 Stunden bei 50 bis 130, vorzugsweise 80 bis 120°C, behandelt. Hierauf wird mit Säure neutralisiert und mit Wasser gewaschen. Aus der organischen Phase wird schließlich unter vermindertem Druck das Lösungsmittel abdestilliert.

Einzelheiten über die Reaktionsbedingungen sind auch aus den nachstehenden Beispielen ersichtlich. Die Harze lassen sich diskontinuierlich oder kontinuierlich herstellen.

Die nach dem erfindungsgemäßen Verfahren hergestellten Weich- und Hartharze eignen sich in Kombination mit anderen üblicherweise als Lackbindemittel zu verwendenden physikalisch trocknenden Filmbildnern, wie Cellulosederivaten, z.B. Nitrocellulose, Äthylcellulose, Celluloseacetobutyrat, Chlorkautschuk, Mischpolymerisaten auf Vinylester-, Vinylchlorid-, Acrylester-, Vinylaromatenbasis, z.B. Vinylchlorid/Vinylisobutyläthercopolymerisate, chemisch trocknenden Bindemitteln, wie Alkydharzen, trocknenden und halbtrocknenden Ölen, zur Herstellung von Lacken mit guter Haftfestigkeit, Härte und Lichtbeständigkeit. Der Gehalt dieser Lacke an erfindungsgemäß hergestelltem Harz kann in weiten Grenzen variieren, beträgt jedoch in den meisten Fällen nicht mehr als 50, vorzugsweise 2 bis 40 Gew.% des gesamten Bindemittels.

Die erfindungsgemäßen Lackbindemittel können mit den in der Lacktechnik üblichen Lösungs- und Verfünnungsmitteln, wie Alkoholen, Ketonen, Äthern, Estern oder aliphatischen und aromatischen Kohlenwasserstoffen, wie z.B. Toluol, Xylol, Hexan, Testbenzin oder Gemischen der vorgenannten Lösungsmittel sowie Pigmenten, Farbstoffen, Weichmachern, Verlaufshilfsmitteln und anderen Hilfsmitteln, verarbeitet werden.

Die erfindungsgemäßen Lackbindemittel eignen sich unter Anwendung üblicher Appliaktionsverfahren, wie Streichen, Spritzen oder Gießen zum Lackieren von Substraten, wie Holz, Spanplatten, Papier und Metall.

Sie lassen sich sehr vorteilhaft verarbeiten. Man erhält Lackierungen mit sehr guten mechanischen Eigenschaften, gutem Glanz, guter Lichbeständigkeit und guter Wasserfestigkeit.

Die erfindungsgemäßen Lackbindemittel sind beispielsweise sehr vorteilhaft zur Herstellung von Holzlacken, Papierlacken und Korrosionsschutzlacken geeignet.

Die in den Beispielen genannten Teile und Prozente bedeuten Gewichtsteile bzw. Gewichtsprozente.

## Beispiel 1

Harnstoff-Isobutyraldehyd-Harz im Molverhältnis 1 : 2

Eine Mischung aus 576 Teilen Isobutyraldehyd, 800 Teilen Xylol und 240 Teilen Harnstoff wird in einem Rührkolben, der mit Kühler, Wasserabscheider, Thermometer und Tropftrichter versehen ist, auf Siedetemperatur aufgeheizt und innerhalb von 5 Minuten mit 50 Teilen 75 %iger Schwefelsäure versetzt. Die Reaktionsmischung wird 3 Stunden unter Rückfluß gekocht, wobei die Temperatur auf 130°C ansteigt. Das entstehende Wasser (133 Teile) wird über den Wasserabscheider ausgetragen. Anschließend wird mit 50 %iger Natronlauge auf pH 8 bis 9 eingestellt und weiter Wasser ausgekreist, bis eine Temperatur von 136 bis 138°C erreicht ist.

Zum Kolbeninhalt gibt man sodann 60 Teile Natriummethylat 30 %ig und kocht 1 Stunde unter Rückfluß.

Danach wird mit ca. 20 Teilen 75 %iger Schwefelsäure neutralisiert und mit 1 000 Teilen Wasser bei 80°C gewaschen. Nach Abtrennen des Waschwassers wird aus der Xylolphase das Xylol im Vakuum bis 180°C Sumpftemperatur abdestilliert.

Es werden 595 Teile eines hellen, in Alkohol löslichen Harzes mit einem Erweichungspunkt nach Krämer-Sarnow-Nagel (=KSN) von 146°C erhalten.

## Beispiel 2

Harnstoff-Isobutyraldehyd-Harz im Molverhältnis 1 : 3

864 Teile Isobutyraldehyd, 800 Teile Xylol und 240 Teile Harnstoff werden in einem mit Kühler, Wasserabscheider, Thermometer und Tropftrichter ausgestatteten Rührkolben gemischt und auf Siedetemperatur aufgeheizt. Man läßt innerhalb von ca. 10 Minuten 50 Teile 75 %ige Schwefelsäure zutropfen und rührt dann 5 Stunden bei Siedetemperatur. Das entstehende Wasser (158 Teile) wird über den Wasserabscheider ausgetragen. Die Temperatur steigt während der Kondensation auf 123 bis 125°C an. Anschließend wird auf 80°C abgekühlt, mit ca. 50 Teilen 50 %iger Natronlauge neutralisiert und weiter bei Siedetemperatur Wasser ausgekreist, bis eine Temperatur von 132 bis 135°C erreicht ist. Zum Kolbeninhalt gibt man sodann 60 Teile Natriummethylat 30 %ig und läßt 1 Stunde bei Siedetemperatur rühren (112 bis 115°C). Danach wird auf 60°C abgekühlt, mit 75 %iger Schwefelsäure neutralisiert und mit 1 ))) Teilen Wasser bei 80°C gewaschen. Nach Abtrennen des Waschwassers wird aus der Xylolphase das Lösungsmittel im Vakuum (26,6 bis 33,3mbar) bis 175°C Sumpftemperatur abdestilliert.

Als Rückstand erhält man 825 Teile eines hellen Hartharzes mit folgenden Kennzahlen:

| | |
|---|---|
| Erweichungspunkt nach KSN: | ca. 120°C |
| Säurezahl (DIN 53 402) | <5 |
| Farbzahl, 50 %ig in Xylol: | <5 |
| Nichtflüchtiges (2 h 125°C): | >98% |

Einwandfreie Löslichkeit besteht in Testbenzin (Siedegr. 155 bis 185°C) und Xylol. Teilweise löslich ist das Harz in Toluol, Alkoholen (wie Äthanol, Butanol) und Estern (wie Äthylacetat, Butylacetat).

Mit Filmbildnern wie Nitrocellulose, Äthylcellulose, Celluloseacetatbutyrat, Vinylchloridmischpolymerisaten (z.B. ®Laroflex (MP), Chlorkautschuk, Leinölstandöl, zahlreichen Alkylydharzen und Weichmachern (z.B. Dibutylphthalat) und Dioctylphthalat und Ricinusöl besteht einwandfreie Verträglichkeit.

Anwendungsbeispiele

a) Alkydharzlack für Industrie-Lackierungen:

| | |
|---|---|
| 48 | Gewichtsteile Alkydharz (enthaltend ca. 48% trocknende, pflanzliche Fettsäuren), 55 %ig in Xylol-Testbenzin |
| 13,2 | Gewichtsteile Harnstoff-Isobutyraldehyd-Harz (entsprechend Beispiel 2), 50 %ig in Testbenzin |
| 0,5 | Gewichtsteile Siliconöl A, 10 %ig in Xylol |
| 3 | Gewichtsteile Montmorillonit (z.B. Bentone 34), 10 %ig in Xylol |
| 0,5 | Gewichtsteile eines Hautverhütungsmittels auf Basis eines Oxims, z.B. ® Luactin, konz. |
| 30,0 | Gewichtsteile Titandioxid, Rutil |
| 5,0 | Gewichtsteile Terpentinöl |
| 5,0 | Gewichtsteile Xylol |
| 1,0 | Gewichtsteile Trockenstofflösung (Co, Pb, Mn-naphthenat), 50%ig in Xylol |

Der Lack wurde mit Xylol auf Verarbeitungsviskosität (Spritzen oder Streichen) eingestellt. Bei einer Trockenfilmdicke von ca, 30 μm ergab er auf Stahlblechen rasch trocknende, gut haftende und elastische Überzüge.

b) Nitrocelluloselack für Holz und Metall:

| | |
|---|---|
| 9,0 | Gewichtsteile Mittelviskose, esterlösliche Nitrocellulose, 2 : 1 butanolfeucht |
| 11,0 | Gewichtsteile Alkydharz (25% synthetische Fettsäuren enthaltend), 60 %ig in Xylol |
| 2,0 | Gewichtsteile Dioctylphthalat |
| 6,0 | Gewichtsteile Harnstoff-Isobutyraldehydharz (entspr. Beispiel 2) 50 %ig in Äthylacetat |
| 0,2 | Gewichtsteile Soyalecithin |
| 12,0 | Gewichtsteile Titandioxid, Rutil |
| 19,0 | Gewichtsteile Butylacetat |
| 5,0 | Gewichtsteile Äthylglycol |
| 5,0 | Gewichtsteile Butanol |
| 10,0 | Gewichtsteile Xylol |
| 20,8 | Gewichtsteile Äthylacetat |
| 100,0 | |

| | |
|---|---|
| Festgehalt: | ca. 29,5% |
| Auslaufzeit (DIN 53 211, 4 mm): | ca. 20″ |

Der Lack wurde mit der Spritzpistole aufgetragen.
Er ergab auf Eisen gut haftende, hart Lacküberzüge.

c) Nitrocellulose-Papierlack:

| | |
|---|---|
| 15,0 | Gewichtsteile mittelviskose, esterlösliche Nitrocellulose, 2 : 1 butanolfeucht |
| 10,0 | Gewichtsteile Harnstoff-Isobutyraldehydharz (entspr. Beispiel 2) |
| 6,0 | Gewichtsteile Dioctylphthalat |
| 20,0 | Gewichtsteile Äthanol |
| 20,0 | Gewichtsteile Äthylacetat |
| 28,8 | Gewichtsteile Butylacetat |
| 0,2 | Gewichtsteile Siliconöllösung, 10 %ig in Toluol |
| 100,0 | |

| | |
|---|---|
| Festgehalt: | ca. 26% |
| Auslaufzeit (DIN 53 211, 4 mm): | ca. 20″ |

Bei einer Auftragsmenge von ca. 4 g/m$^2$ auf Kunstdruckpapier wurden harte, glänzende, lichtbeständige Lacküberzüge erhalten.

### Beispiel 3

Harnstoff-Isobutyraldehyd-Harz im Molverhältnis 1 : 4,25

In einem Rührkolben, der mit Kühler, Wasserabscheider, Thermometer und Tropftrichter ausgestattet ist, werden 1 224 Teile Isobutyraldehyd, 800 Teile Xylol und 240 Teile Harnstoff gemischt und auf Siedetemperatur aufgeheizt. Innerhalb von 10 Minuten läßt man durch den Trofptrichter 100 Teile 75 %ige Schwefelsäure zufließen. Die Reaktionsmischung wird 5 Stunden bei Siedetemperatur gerührt, wobei die Temperatur von 72 auf 94°C ansteigt. Das entstehende Wasser (175 Teile) wird über den Wasserabscheider ausgetragen.

Danach wird mit 50 %iger Natronlauge auf pH 8 bis 9 eingestellt und weiter Wasser ausgekreist. Nach ca. 2 Stunden ist die Wasserauskreisung beendet. Zur Reaktionsmischung gibt man sodann 120 Teile 30 %ige Natriummethylatlösung und läßt 1 Stunde bei Siedetemperatur (100 bis 105°C) rühren.

Anschließend wird auf 60°C abgekühlt, mit 75 %iger Schwefelsäure neutralisiert (pH 7) und mit 1 000 Teilen Wasser gewaschen. Nach Abtrennen des Waschwassers wird aus der organischen Phase unter Vakuum (26,6mbar) das Xylol abdestilliert bis zum Erreichen einer Innentemperatur von 175°C. Man erhält 1 040 Teile eines hellen Harzes, das sich klar in Alkohol und Testbenzin löst und einen Erweichungspunkt nach KSN von 95 bis 100°C aufweist.

### Beispiel 4

Harnstoff-Isobutyraldehyd-Harz im Molverhältnis 1 : 8

1 152 Teile Isobutyraldehyd, 800 Teile Xylol und 120 Teile Harnstoff werden in einer wie in Beispiel 1 beschriebenen Rührapparatur gemischt und auf Siedetemperatur aufgeheizt. Man tropft innerhalb von 10 Minuten 50 Teile 75 %ige Schwefelsäure zu und läßt dann 5 Stunden bei Siedetemperatur rühren. Das entstehende Wasser (89 Teile) wird über den Wasserabscheider ausgetragen. Danach wird mit 50 %iger Natronlauge neutral gestellt und weiter Wasser ausgekreist, bis eine Temperature von ca 90°C erreicht ist. Zur Reaktionslösung gibt man sodann 60 Teile Natriummethylat 30 %ig und läßt 1 Stunde bei Siedetemperatur rühren.

Anschließend wird auf 60°C abgekühlt, mit 75 %iger Schwefelsäure neutralisiert (pH 7) und mit 1 000 Teilen Wasser bei 60 bis 70°C gewaschen. Nach Abtrennen des Waschwassers wir aus der organischen Phase das Lösungsmittel im Vakuum abdestilliert, bis eine Sumpftemperatur von 170 bis 175°C erreicht ist.

Als Rückstand erhält man 800 Teile eines hellen Weichharzes, das in Alkohol und Testbenzin klar löslich ist.

### Beispiel 5

Harnstoff-n-Butyraldehyd-Harz im Molverhältnis 1 : 4,25

612 Teile n-Butyraldehyd, 400 Teile Xylol und 120 Teile Harnstoff werden in einer wie in Beispiel 1 beschriebenen Rührapparatur zusammengegeben, auf Siedetemperatur aufgeheizt und vorsichtig mit 50 Teilen 75 %iger Schwefelsäure versetzt. Man Läßt die Mischung unter Rückfluß kochen und trägt das entstehende Wasser (128 Teile) über den Wasserabscheider aus. Nach ca. 4 Stunden ist die Wasserauskreisung beendet. Anschließend neutralisiert man mit 50 %iger Natronlauge und läßt weitere 2 Stunden unter Auskreisen von Wasser bei Siedetemperatur rühren.

Zur Reaktionslösung gibt man sodann 60 Teile Natriummethylat 30 %ig, rührt 1 Stunden bei Siedetemperatur und neutralisiert nach Abkühlen auf 60°C mit 75 %iger Schwefelsäure.

Die weitere Aufarbeitung erfolgt analog Beispiel 3. Man erhält 480 Teile Weichharz, das in Alkohol und Testbenzin gut löslich ist.

### Beispiel 6

Harnstoff-2-Methylpentanal-Harz im Molverhältnis 1 : 4

Eine Mischung aus 800 Teilen 2-Methylpentanal, 800 Teilen Xylol und 120 Teilen Harnstoff wird in einer wie in Beispiel 1 beschriebenen Rührapparatur auf Siedetemperatur aufgeheizt und tropfenweise mit 50 Teilen 75 %iger Schwefelsäure versetzt. man läßt die Mischung bei Siedetemperatur rühren und trägt das entstehende Wasser (84 Teile) über den Wasserabscheider aus. Nach ca. 3 Stunden ist die Kondensation beendet. Die Reaktionsmischung wird mit 50 %iger Natronlauge neutralisiert und eine weitere Stunde unter Auskreisen von Wasser bei Siedetemperatur gerührt. Zum Kolbeninhalt gibt man sodann 60 Teile 40 %ige Natriummethylatlösung und läßt nochmals 1 Stunde bei Siedetemperatur rühren. Danach wird auf 60°C abgekühlt mit 75 %iger Schwefelsäure neutralisiert (pH 7) und 2 mal mit je 1 000 Teilen Wasser gewaschen. Nach Abtrennen des Waschwassers wird die xylolische Lösung im Vakuum (26,6 bis 33,3mbar) bis zum Erreichen einer Sumpftemperatur von 175°C eingedampft.

Es werden 450 Teile eines hellbraun gefärbten Harzes erhalten, das sich klar in Alkohol und Testbenzin löst und einen Erweichungspunkt nach KSN von 68°C aufweist.

Beispiel 7

Nonandiharnstoff-Isobutyraldehyd-Harz im Molverhältnis 1 : 6,25

Eine Mischung aus 244 Teilen Nonandiharnstoff, 450 Teilen Isobutyraldehyd und 800 Teilen Xylol wird unter Rühren auf Rückflußtemperatur aufgeheizt und innerhalb von 10 Minuten mit 50 Teilen 75 %iger Schwefelsäure versetzt.

Man läßt die Reaktionsmischung 2 Stunden bei Siedetemperatur rühren und trägt das entstehende Wasser (109 Teile) über einen Wasserabscheider aus. Die Temperatur steigt während dieser Zeit von 70 auf 105°C an.

Anschließend wird auf 80°C abgekühlt, mit Natronlauge (50 %ig) neutralisiert und eine weitere Stunde unter Auskreisen von Wasser bei Siedetemperatur gerührt.

Zur Reaktionsmischung tropft man sodann 60 Teile einer 30 %igen Natriummethylatlösung und kocht 1 Stunde unter Rückfluß. Danach wird auf 60°C abgekühlt, mit 75 %iger Schwefelsäure neutralisiert und zweimal mit je 1 000 Teilen Wasser bei 80°C gewaschen. Nach Abtrennen des Waschwassers wird aus der organischen Phase das Xylol im Vakuum (26,6mbar) bis zum Erreichen einer Sumpftemperatur von 175°C abdestilliert.

Man erhält als Rückstand 460 Teile eines schwach gelb gefärbten Harzes mit einem Erweichungspunkt von 65°C nach KSN.

**Patentansprüche**

1. Verfahren zur Herstellung von Weich- und Hartharzen aus Harnstoff und einem CH-aciden Aldehyd, wobei man Harnstoffe der allgemeinen Formel (I)

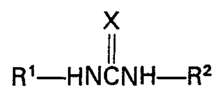

(I),

worin X Sauerstoff oder Schwefel und $R^1$ und $R^2$ Wasserstoff, gleiche oder verschiedene Alkyl-, Aryl- oder Aralkylreste oder gegebenenfalls einen Alkylenharnstoffrest bedeuten, mit mindestens 2 Mol eines CH-aciden Aldehyds der allgemeinen Formel (II)

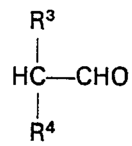

(II),

worin $R^3$ Wasserstoff oder wie $R^4$ gleiche oder verschiedene Alkyl-, Aryl- oder Aralkylreste bedeuten, zwischen 70 und 150°C in Gegenwart einer starken Säure zu einem Kondensationsprodukt umsetzt, dadurch gekennzeichnet, daß man anschließend in einem wasserfreien Medium mit einer Base nachbehandelt.

2. Verfahren nach Anspruch 1, dadurch gekennzeichnet, daß Harnstoffe der allgemeinen Formel (I) verwendet werden, worin $R^1$ und $R^2$ Wasserstoff oder gleiche oder verschiedene 1 bis 18 Kohlenstoffatome enthaltende Alkyl- oder 6 bis 9 Kohlenstoffatome enthaltende Aryl- oder Aralkylreste oder einen Alkylenharnstoffrest mit 1 bis 9 Kohlenstoffatomen in der Alkylengruppe bedeuten.

3. Verfahren nach einem der vorhergehenden Ansprüche, dadurch gekennzeichnet, daß $R^3$ und $R^4$ in der allgemeinen Formel (II) des CH-aciden Aldehyds gleiche oder verschiedene 1 bis 10 Kohlenstoffatome enthaltende Alkylreste oder 6 bis 9 Kohlenstoffatome enthaltende Aryl- oder Alkylarylreste bedeuten.

4. Verfahren nach einem der vorhergehenden Ansprüche, dadurch gekennzeichnet, daß als CH-acider Aldehyd mindestens einer aus der Gruppe Isobutyraldehyd, 2-Äthylhexanal, 2-Methylpentanal, Phenylpropanal, Isovaleraldehyd und n-Butyraldehyd eingesetzt wird.

5. Verfahren nach einem der vorhergehenden Ansprüche, dadurch gekennzeichnet, daß Harnstoff und CH-acider Aldehyd in einem Molverhältnis von 1 : 2 bis 1 : 8 eingesetzt werden.

6. Verfahren nach einem der vorhergehenden Ansprüche, dadurch gekennzeichnet, daß Harnstoff und CH-acider Aldehyd in einem Molverhältnis von 1 : 3 bis 1 : 6 eingesetzt werden.

7. Verfahren nach einem der vorhergehenden Ansprüche, dadurch gekennzeichnet, daß die Umsetzung in Gegenwart aromatischer Kohlenwasserstoffe durchgeführt, und als Base für die Nachbehandlung ein Alkalialkoholat verwendet wird.

8. Verfahren nach Anspruch 7, dadurch gekennzeichnet, daß als Alkalialkoholat für die Nachbehandlung Natriummethylat oder Natriumäthylat verwendet wird.

9. Verfahren nach einem der vorhergehenden Ansprüche, dadurch gekennzeichnet, daß die Nachbehandlung mit einer Base etwa 1 bis 2 Stunden bei 50 bis 130°C durchgeführt wird.

10. Verwendung der nach einem Verfahren gemäß einem der vorhergehenden Ansprüche hergestellten Weich- und Hartharze in Kombination mit anderen Filmbildnern als Lackbindemittel.

**Revendications**

1. Procédé de préparation de résines molles et cassantes à partir d'urée et d'un aldéhyde CH-acide, dans lequel on fait réagir, entre 70 et 150°C, en présence d'un acide fort, pour obtenir un produit de condensation, une urée de formule générale I

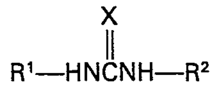

(I),

où X représente l'oxygène ou le soufre et $R^1$ et $R^2$ de l'hydrogène, des restes alkyle, aryle ou aralkyle identiques ou différents, ou éventuellement un reste alkylèneurée, avec au moins 2 moles d'un aldéhyde CH-acide de formule générale (II)

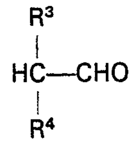

(II),

où $R^3$ représente l'hydrogène ou, comme $R^4$, des restes alkyle, aryle ou aralkyle identiques ou différents, caractérisé par le fait qu'ensuite on soumet à un post-traitement avec une base dans un milieu exempt d'eau.

2. Procédé selon la revendication 1, caractérisé par le fait qu'on utilise de l'urée de formule générale (I) dans laquelle $R^1$ et $R^2$ représentent de l'hydrogène ou des restes alkyle contenant 1 à 18 atomes de carbone, ou aryle ou aralkyle contenant 6 à 9 atomes de carbone, restes identiques ou différents, ou un reste alkylènurée à 1 à 9 atomes de carbone dans le groupe alkylène.

3. Procédé selon l'une des revendications précédentes, caractérisé par le fait que $R^3$ et $R^4$, dans la formule générale (II) de l'aldéhyde CH-acide, représentant des restes, identiques ou différents, alkyle contenant 1 à 10 atomes de carbone ou aryle ou alkylaryle contenant 6 à 9 atomes de carbone.

4. Procédé selon l'une des revendications précédentes, caractérisé par le fait que l'on fait réagir, comme aldéhyde CH-acide, au moins un du groupe isobutyraldéhyde, 2-éthyl-hexanal, 2-méthylpentanal, phénylpropanal, isovaléraldéhyde et n-butyraldéhyde.

5. Procédé selon l'une des revendications précedentes, caractérisé par le fait qu'on fait réagir l'urée et l'aldéhyde CH-acide dans un rapport molaire de 1/2 à 1/8.

6. Procédé selon l'une des revendications précédentes, caractérisé par le fait qu'on fait réagir l'urée et l'aldéhyde CH-acide dans un rapport molaire de 1/3 à 1/6.

7. Procédé selon l'une des revendications précédentes, caractérisé par le fait que la réaction est effectuée en présence d'hydrocarbure aromatique et on utilise, comme base, pour le post-traitement, un alcoolate alcalin.

8. Procédé selon la revendication 7, caractérisé par le fait qu'on utilise, comme alcoolate alcalin, pour le post-traitement, du méthylate de sodium ou de l'éthylate de sodium.

9. Procédé selon l'une des revendications précédentes, caractérisé par le fait que le post-traitement avec une base est effectué pendant environ 1 à 2 heures, à 50 à 130°C.

10. Utilisation comme liant de peinture, des résines molles et cassantes obtenues par un procédé selon l'une des revendications précédentes, en combinaison avec d'autres filmogènes.

**Claims**

1. A process for the preparation of soft and hard resins from a urea and a CH-acidic aldehyde, by reacting a urea of the general formula (I)

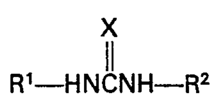

(I)

where X is oxygen or sulfur and $R^1$ and $R^2$ are hydrogen, identical or different alkyls, aryls or aralkyls or may be an alkyleneurea radical, where alkylene is of 1 to 9 carbon atoms, with at least 2 moles of a CH-acidic aldehyde of the general formula (II)

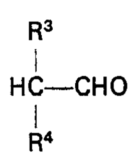

(II)

where $R^3$ is hydrogen and $R^4$ is alkyl, aryl or aralkyl, or $R^3$ and $R^4$ are identical or different alkyls, aryls or aralkyls, in the presence of a strong acid, to give a condensation product, characterized in that the said product is subsequently treated with a base in an anhydrous medium.

2. A process as claimed in claim 1, characterized in that a urea of the general formula (I) is used in which $R^1$ and $R^2$ are hydrogen or identical or different alkyls of 1 to 18 carbon atoms or identical or different aryls or aralkyls of 6 to 9 carbon atoms, or an alkyleneurea radical, where alkylene is of 1 to 9 carbon atoms.

3. A process as claimed in any of the preceding claims, characterized in that $R^3$ and $R^4$ in the general formula (II) of the CH-acidic aldehyde are identical or different alkyls of 1 to 10 carbon atoms, or identical or different aryls or aralkyls of 6 to 9 carbon atoms.

4. A process as claimed in any of the preceding claims, characterized in that the CH-acidic aldehyde employed is at least one aldehyde selected from the group consisting of isobutyraldehyde, 2-ethylhexanal, 2-methylpentanal, phenylpropanol, isovaleraldehyde and n-butyraldehyde.

5. A process as claimed in any of the preceding claims, characterized in that the urea and the CH-acidic aldehyde are employed in a molar ratio of from 1:2 to 1:8.

6. A process as claimed in any of the preceding claims, characterized in that the urea and the CH-acidic aldehyde are employed in a molar ratio of from 1:3 to 1:6.

7. A process as claimed in any of the preceding claims, characterized in that the reaction is carried out in the presence of an aromatic hydrocarbon, and the base employed for the after-treatment is an alkali metal alcoholate.

8. A process as claimed in claim 7, characterized in that the alkali metal alcoholate employed for the after-treatment is sodium methylate or sodium ethylate.

9. A process as claimed in any of the preceding claims, characterized in that the after-treatment with a base is carried out for from about 1 to 2 hours at from 50 to 130°C.

10. Use of the soft or hard resins produced by a process as claimed in any of the preceding claims, in combination with other film-forming agents, as surface-coating binders.